# EUROPEAN PATENT APPLICATION

(11) **EP 3 095 985 A1**
(43) Date of publication of application: **23.11.2016**
(21) Application number: 16161456.5
(22) Date of filing: 21.03.2016
(51) Int. Cl.: F02C 6/08, F02C 9/18, F02C 9/52, F04D 27/02, F16K 15/03

(54) **PNEUMATIC PORTING VIA SELF-ACTUATED DUAL PIVOT FLAPPER VALVE**

(30) Priority: 20.05.2015 US 201514717766
(71) Applicant: United Technologies Corporation, Farmington, CT 06032 (US)
(72) Inventor: MAROCCHINI, Francis P., Somers, CT Connecticut 06071 (US); RICKIS, Aaron F., Feeding Hills, MA Massachusetts 01030 (US); GOODMAN, Robert, West Hartford, CT Connecticut 06117 (US); THOMAS, Michael R., Bloomfield, CT Connecticut 06002 (US)
(74) Representative: Gittins, Alex Michael

(57) **Abstract**

Aspects of the disclosure are directed to an engine of an aircraft. Aspects of the disclosure include an inlet housing 304 configured to receive core air 274 of an engine 10, and at least one valve 308 coupled to the inlet housing 304 and configured to bleed the core air 274 during a starting of the engine 10, where the at least one valve 308 is housed within the engine 10.

## Description

### BACKGROUND

In an aircraft engine environment, a bleed valve may be used during engine start to reduce a load on a compressor, allowing the engine to spin/spool-up and start faster. Typically, start valves are poppet designs or in-line style valves that require a large geometric area to meet a specified flow effective area. Conventionally, the valves tend to be bulkhead mounted or duct mounted with right angle ducting for routing along the exterior of the engine.

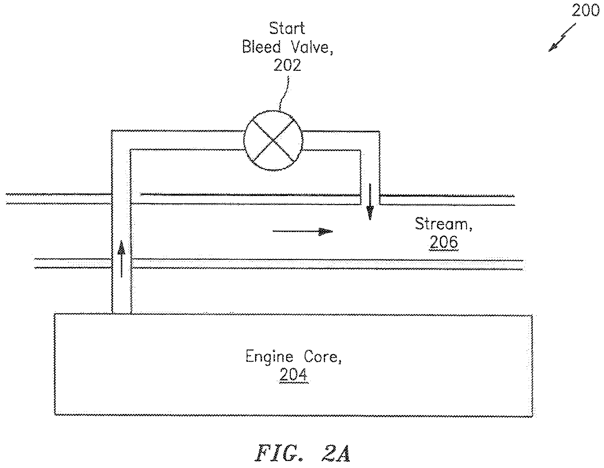

FIG. 2A illustrates a system 200 incorporating a self-actuated start bleed valve 202. The valve 202 dumps highly pressurized air from an engine core 204 to a lower pressure/temperature flow stream (denoted via reference character 206).

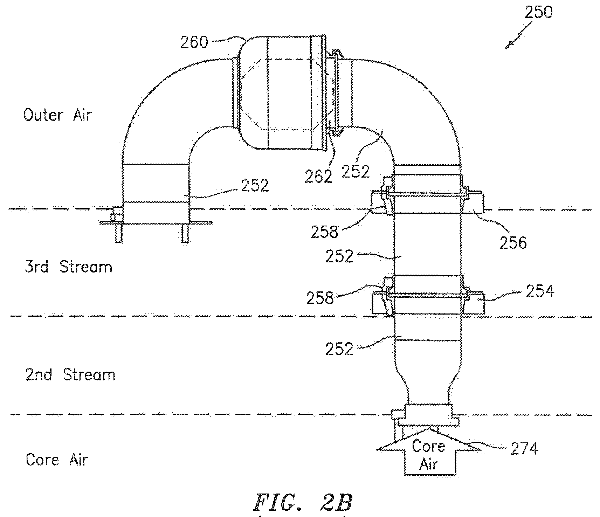

FIG. 2B illustrates a start bleed routing system 250 in accordance with the prior art, such as in connection with the system 200. The system 250 includes multiple tubes 252, a first inner duct 254 and a second outer duct 256. The ducts are frequently associated with seals and/or cases that serve to segregate various streams (e.g., 2^{nd} stream and 3^{rd} stream) that are characterized by different temperatures and pressures. Connections (e.g., a bolted interface) associated with such seals/cases is shown via reference character 258. At least some of the tubes 252 attach to a valve housing 260 via a clamp 262 that frequently takes the form of a V-shape and is referred to as a `V-band'.

In practice, core air (denoted by arrow/reference character 274 in FIG. 2B) of the engine is routed to a different flow and pressure environment within the engine, such as the "3^{rd} steam" as shown in FIG 2B. A valve included in the housing 260 controls the flow rate of the air. As shown in FIG. 2B, the tubes 252 include right-angled and straight geometries. The tubes 252 attach to the exterior of the engine to route the flow (e.g., the core air 274) to the intended destination (e.g., the 3^{rd} stream). As shown in FIG. 2B, the core air 274: (1) traverses the 2^{nd} stream and the 3^{rd} stream, (2) leads to the outer air/environment, and (3) is then returned to the 3^{rd} stream. This is done based on the packaging that is available and the desire to provide accessibility to the valve in the housing 260; e.g., in such a configuration the valve can be treated as a line replaceable unit (LRU).

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a system associated with an engine of an aircraft, comprising: an inlet housing configured to receive core air of the engine, and at least one valve coupled to the inlet housing and configured to bleed the core air during a starting of the engine, where the at least one valve is housed within the engine. In some embodiments, the at least one valve is configured to bleed the core air into a third stream associated with the engine. In some embodiments, the at least one valve is configured to bleed the core air into an ambient environment. In some embodiments, the at least one valve is configured to bleed the core air at a substantial right angle relative to a major axis of the system. In some embodiments, the system comprises a cover configured to seal the at least one valve from an ambient environment. In some embodiments, the system comprises at least one standoff configured to secure the at least one valve to the inlet housing and secure the cover to seal the at least one valve from the ambient environment. In some embodiments, the at least one valve comprises a flapper configured to rotate between an open position and a closed position. In some embodiments, the flapper is configured to be in the open position during the starting of the engine. In some embodiments, the flapper is configured to be in the closed position subsequent to the starting of the engine. In some embodiments, once the flapper is in the closed position the flapper is configured to remain in the closed position until the engine speed drops below a prescribed value as the engine shuts down. In some embodiments, the system comprises a pivot rod coupled to the flapper that is configured to support a rotation of the flapper. In some embodiments, the system comprises a spring coupled to the flapper that is configured to bias the flapper to the open position during the starting of the engine. In some embodiments, the spring is a torsion spring. In some embodiments, the spring is configured to bias the flapper to the closed position as a function of a spring constant of the spring in relationship to a differential pressure. In some embodiments, the system comprises a first sealing interface between the core air and a second stream associated with the engine. In some embodiments, the system comprises a second sealing interface between the second stream and a third stream associated with the engine. In some embodiments, at least one of the first sealing interface or the second sealing interface comprises a slider seal. In some embodiments, the at least one valve is located within at least one of a second stream or a third stream associated with the engine.

### BRIEF DESCRIPTION OF THE DRAWINGS

The present disclosure is illustrated by way of example and not limited in the accompanying figures in which like reference numerals indicate similar elements.
FIG. 1 is a side cutaway illustration of a geared turbine engine.
FIG. 2A illustrates a system for bleeding engine air to a stream in accordance with the prior art.
FIG. 2B illustrates a system for bleeding engine air that incorporates tubes and a valve in accordance with the prior art.
FIG. 3 illustrates a system assembly for implementing a valve in accordance with aspects of the disclosure.
FIGS. 4A-4C illustrate various views of a system for implementing a valve in accordance with aspects of the disclosure.
FIGS. 5A-5B illustrate a system assembly for implementing a valve in accordance with aspects of the disclosure.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

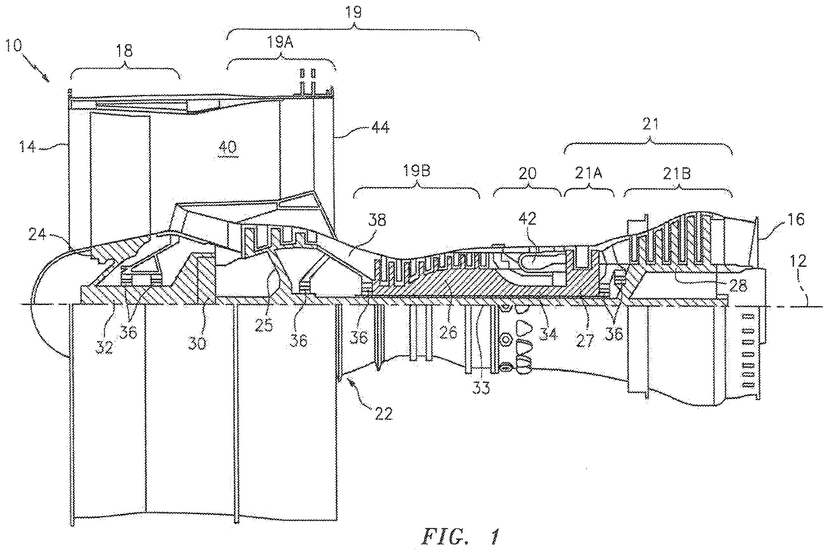

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36; e.g., rolling element and/or thrust bearings. Each of these bearings 36 is connected to the engine housing 22 by at least one stationary structure such as, for example, an annular support strut.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines.

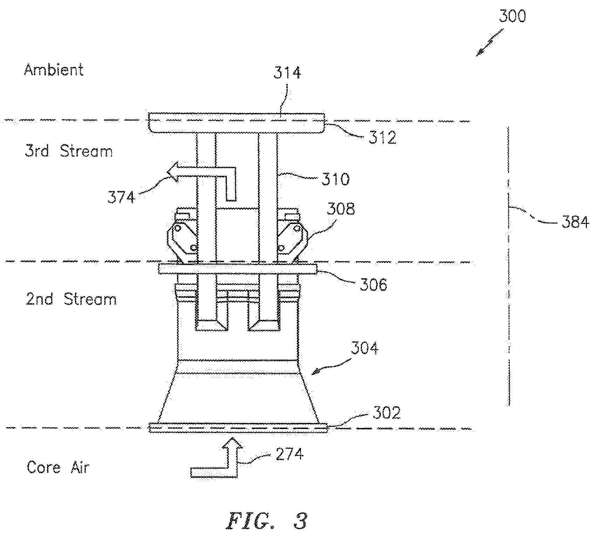

Referring now to FIG. 3, a system assembly 300 implementing a valve in accordance with aspects of the disclosure is shown. The system 300 may include one or more of a first sealing interface 302, an inlet housing 304, a second sealing interface 306, one or more valves 308 (e.g., a dual pivot flapper valve), one or more standoffs 310, a third sealing interface 312, and a cover 314.

The inlet housing 304 may be coupled (e.g., rigidly attached) to an inner core of the engine to provide a path for the bleed of the core air 274 into, e.g., the 3^{rd} stream and to obtain a grounding of the assembly. As shown via arrow 374 in FIG. 3, the bleed air may be directed at a substantial right angle relative to a (major) axis 384 of the system assembly 300.

The valve 308 may control/provide "open"/"closed" actuation. The valve 308's diminutive configuration may enable the valve 308 to be easily housed within the engine, such as for example between various engine cases.

The standoff(s) 310 may secure the valve 308 to the inlet housing 304 and secure the closure/cover 314 to seal 312 the assembly or a portion thereof (e.g., the valve 308) from the ambient environment. The standoff(s) 310 may provide an exit opening for the bleed to release to. In addition, by utilizing the standoff(s) 310 a significant reduction in flow restriction (e.g., a flow restriction experienced in connection with the 3^{rd} stream flow) may be obtained.

Sealing between ducts/casings (e.g., sealing associated with one or more of the interfaces 302, 306, or 312) may be obtained via the use of one or more slider seals or any other type of seal. Any sealing that is provided may be between two or more of the core air, the 2^{nd} stream, the 3^{rd} stream, or the external/ambient environment.

The cover 314 may provide access to the assembly 300 or one or more portions thereof. For example, the cover 314 may be removed to provide easy access to the valve 308.

The system assembly 300 may be associated with a symmetric/non-cantilever configuration. Such a configuration may be optimum in terms of inclusion in an environment that subject to large vibration, such as for example in connection with an engine of an aircraft. Additionally, this configuration may contain internal pressure and prevent/minimize leakage to an external environment.

In view of the system assembly 300 of FIG. 3, a valve (e.g., valve 308) may be used to reduce pressure loads within an engine to facilitate starting the engine. As part of the engine start, core pressure may be vented to a lower pressure destination. FIG. 3 shows core pressure 274 being vented to a 3^{rd} stream pressure; however, any lower pressure environment/destination (including the external/ambient environment) may be used. The valve 308 may be configured to be open to bleed off high pressure during engine start. As the engine starts and begins to spool-up, the excessive bleed flow may trip/trigger the valve 308 to a closed/sealed position, thereby allowing for normal operation of the engine.

As shown in FIG. 3, the structural elements of the assembly 300 might not be located in the external/ambient environment, such that the structural elements of the assembly 300 are located/housed within the engine (e.g., within one or both of the 2^{nd} stream and the 3^{rd} stream). This may be contrasted with FIG. 2B, wherein the housing 260 and portions of the tubes 252 are shown as being located in the external environment (labeled 'outer air' in FIG. 2B). The configuration of FIG. 3 may lend itself to enhanced performance with respect to the streams (e.g., the 3^{rd} stream) relative to the configuration of FIG. 2B.

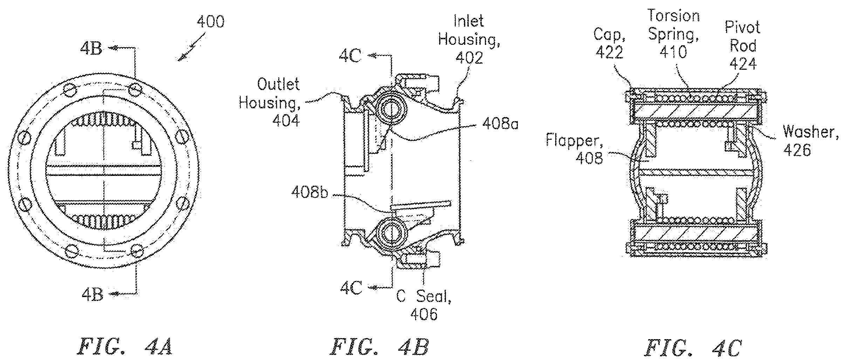

Referring to FIG. 4A, a system assembly 400 implementing a valve in accordance with aspects of the disclosure is shown. FIG. 4B illustrates a cross-section of the system 400 taken along the line A-A in FIG. 4A. Similarly, FIG. 4C illustrates a cross-section of the system 400 taken along the line B-B in FIG. 4B. The collection of FIGS. 4A-4C is referred to herein as FIG. 4.

The system 400 includes a first, inlet housing 402 and a second, outlet housing 404. One or more seals, such as for example a c-seal 406, may be included. In FIG. 4B, a flapper is shown in a closed state/position as denoted by reference character 408a. The flapper is shown in an open state/position as denoted by reference character 408b.

A spring, such as for example a torsion spring 410, may bias the flapper 408 to an open position at engine start (e.g., as shown in connection with 408b). A spring force associated with the spring 410 may be configured for the condition where the valve should initiate closure. A velocity effect over the flapper 408 may provide a pressure (e.g., a lower than static pressure), thereby creating a closing force. As the flapper 408 starts to close this pressure differential increases faster than the spring force increase and the valve may snap shut (e.g., as shown in connection with 408a). In this manner, the spring 410 may be configured to bias the flapper 408 to the closed position as a function of a spring constant of the spring 408 in relationship to the differential pressure.

To make the valve snap shut within a narrow specified band a maximum pressure differential may be created across the flapper 408. This approach maximizes the pressure differential across the flapper 408 as flow increases. The flow path geometry may be designed to ensure the full open pressure drop across the valve is met. Once closed, the valve may remain in this position for the remainder of the mission until the engine is shut down and the pressure is relieved.

As shown in FIG. 4, the system 400 may include a cap 422. The cap 422 may be used to provide for sealing and/or to minimize/prevent leakage into, e_{.}g_{.}, the 2^{nd} stream or the 3^{rd} stream of FIG. 3. The pivot rod 424 may support the movement/rotation of the flapper 412. Additional hardware, such as one or more washers 426, may be included. The washer 426 may control the position of the flapper 408 with respect to the seat and control end of the flapper. The washer 426 may provide an intermediate surface for rotation in case of high friction between the flapper 408 and the outlet housing 404.

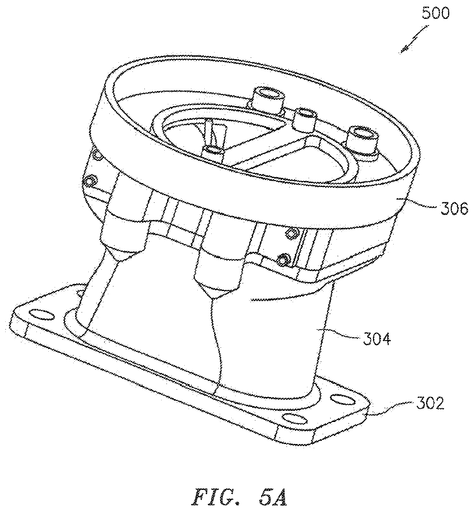

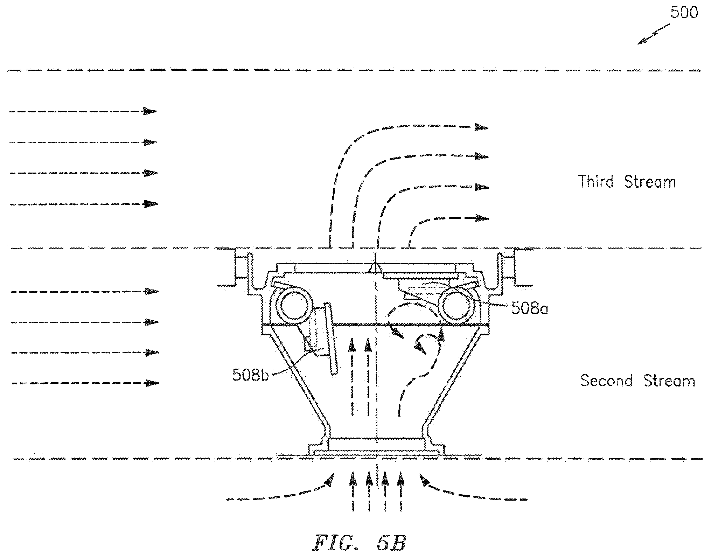

FIGS. 5A-5B depict a system assembly 500 in accordance with aspects of this disclosure. The system 500 includes many of the features described above in connection with the systems 300 and 400 described above, and so, a complete re-description is omitted for the sake of brevity. The system 500 is shown as including a flapper in the closed state/position 508a and the open state/position 508b. The embodiment depicted in connection with the system 500 might not include standoffs. Also, in comparing FIGS. 3 and 5B, the system 500 packing is more compact relative to the packaging of the system 300. For example, the profile/form factor of the system 500 is shown as being contained within the projection of the second stream, such that the third stream is free of structural elements/members.

Technical effects and benefits of this disclosure include a provisioning of a streamlined configuration that may be used to eliminate external ducting, resulting in a significant weight reduction. In some embodiments, standoffs secure a valve to an inlet duct, support an external enclosure, and provide a reduction in terms of restriction experienced by one or more stream flows. Aspects of the disclosure provide for a structurally sound configuration with minimal parts that operate with minimal restrictions. Relative to a conventional valve assembly/system, aspects of the disclosure may enable an increase in performance with respect to one or more streams.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that aspects of a first embodiment may be combined with aspects of one or more additional embodiments.

## Claims

1. A system associated with an engine of an aircraft, comprising:
an inlet housing (304) configured to receive core air (274) of the engine (10); and
at least one valve (308) coupled to the inlet housing (304) and configured to bleed the core air (274) during a starting of the engine (10),
wherein the at least one valve (308) is housed within the engine (10).

2. The system of claim 1, wherein the at least one valve (308) is configured to bleed the core air (274) into a third stream associated with the engine (10).

3. The system of claim 1 or 2, wherein the at least one valve (308) is configured to bleed the core air (274) into an ambient environment.

4. The system of claim 1, 2 or 3 wherein the at least one valve (308) is configured to bleed the core air (274) at a substantial right angle relative to a major axis (384) of the system.

5. The system of any preceding claim, further comprising:
a cover (314) configured to seal the at least one valve (308) from an ambient environment.

6. The system of claim 5, further comprising:
at least one standoff (310) configured to secure the at least one valve (308) to the inlet housing (402) and secure the cover (314) to seal the at least one valve (308) from the ambient environment.

7. The system of any preceding claim, wherein the at least one valve (308) comprises a flapper (408) configured to rotate between an open position (408a) and a closed position (408b).

8. The system of claim 7, wherein the flapper (408) is configured to be in the open position (408a) during the starting of the engine (10), and/or the flapper (408) is configured to be in the closed position (408b) subsequent to the starting of the engine (10).

9. The system of claim 8, wherein once the flapper (408) is in the closed position (408b) the flapper (408) is configured to remain in the closed position (408b) until the engine speed drops below a prescribed value as the engine (10) shuts down.

10. The system of claim 7, 8 or 9 further comprising:
a pivot rod (424) coupled to the flapper (408) that is configured to support a rotation of the flapper (408).

11. The system of any of claims 7 to 10, further comprising:
a spring (410), for example a torsion spring, coupled to the flapper (408) that is configured to bias the flapper (408) to the open position (408a) during the starting of the engine (10).

12. The system of claim 11, wherein the spring (410) is configured to bias the flapper (408) to the closed position (408b) as a function of a spring (410) constant of the spring in relationship to a differential pressure.

13. The system of any preceding claim, further comprising:
a first sealing interface (302) between the core air (274) and a second stream associated with the engine (10).

14. The system of claim 13, further comprising:
a second sealing interface (306) between the second stream and a third stream associated with the engine (10), wherein optionally at least one of the first sealing interface (302) or the second sealing interface (306) comprises a slider seal.

15. The system of any preceding claim, wherein the at least one valve (308) is located within at least one of a second stream or a third stream associated with the engine (10).
